# EUROPÄISCHE PATENTSCHRIFT

(11) **EP 0 970 598 B1**
(45) Veröffentlichungstag und Bekanntmachung des Hinweises auf die Patenterteilung: **15.01.2003**
(21) Anmeldenummer: 99107051.7
(22) Anmeldetag: 09.04.1999
(51) Int. Cl.: A01F 15/07

(54) **Rundballenpresse**
Rotobaler
Presse à balles rondes

(30) Priorität: 09.07.1998 DE 29812264 U
(43) Veröffentlichungstag der Anmeldung: 12.01.2000
(73) Patentinhaber: Kverneland Geldrop B.V., 5660 AA Geldrop (NL)
(72) Erfinder: van den Wildenberg, Leonardus Johannes, 6021 CT Budel (NL)
(74) Vertreter: Grünecker, Kinkeldey, Stockmair & Schwanhäusser Anwaltssozietät

(56) Entgegenhaltungen:
- DE-U- 29 706 544
- GB-A- 2 090 560
- GB-A- 2 150 491

## Beschreibung

Die Erfindung betrifft eine Rundballenpresse der im Oberbegriff des Anspruchs 1 angegebenen Art.

Bei einer aus DE-U-297 06 544 bekannten Rundballenpresse wird der dritte Wandabschnitt durch eine auf Umlenkrollen laufende, endlose Preßbahn nach Art eines Förderbandes gebildet. Damit diese Preßbahn den Rundballen über ihre gesamte Breite mit dem erforderlichen Druck zu beaufschlagen vermag, sind die Umlenkrollen in Querrichtung über die gesamte Preßkammerbreite durchgehend auszubilden, was zu hohem Gewicht des Wandabschnittes und zu der Gefahr führt, daß sich Erntegut im Inneren der Preßbahnschlaufe um die Umlenkrolle wickelt. Im ersten Wandabschnitt kann eine Pressbahn aus querliegenden, an Ketten abgestützten Stäben vorgesehen sein.

Bei einer aus DE-U-297 06 540 bekannten Rundballenpresse ist der dritte Wandabschnitt in der Klappe eine förderbandartig ausgebildete Preßbahn- oder Preßriemen-Schlaufe oder ein Walzengang mit mehreren Preßwalzen. Die Umlenkwalze der Preßbahn bzw. Preßriemen in diesem dritten Wandabschnitt wie auch die Walzen des Walzenganges gehen über die Breite der Preßkammer durch. Dadurch erhält der dritte Wandabschnitt hohes Gewicht. Es besteht außerdem die Gefahr sich verklemmenden Ernteguts. Da der dritte Wandabschnitt in Wickelrichtung angetrieben werden muß, können sich Probleme beim Übertragen der Antriebsbewegung ergeben. Allerdings hat diese Ausbildung der Rundballenpresse den Vorteil einer nahezu runden Form der Preßkammer in deren Startgröße, was für eine optimale Startphase beim Wickeln des Ballenkernes vorteilhaft ist.

Bei einer aus EP-A-01 25 719 bekannten Rundballenpresse sind zwei getrennte, jeweils endlose Leiterbandschlaufen vorgesehen, deren jede aus zwei außenseitigen breiten Riemen besteht, die durch Querstäbe miteinander verbunden sind. Nur die Riemen laufen über seitliche Stützrollen. Die Stützrollen und die Riemenhinterseiten sind mit einem Eingriffsprofil versehen. Die sich hauptsächlich in der Klappe erstrekkende, zweite Leiterbandschlaufe wird über den Gelenkpunkt der zum Öffnen schwenkbaren Klappe angetrieben. Bei Startgröße der Kammer ergibt sich eine unerwünscht spitzwinkelige Preßkammerform, die das Wickeln des Ballenkerns erschwert. Wegen der großen Länge der zweiten Leiterbandschlaufe und ihrer mehrfachen Umlenkung benötigt diese eine hohe Antriebsleistung, deren Übertragung schwierig ist.

Der Erfindung liegt die Aufgabe zugrunde, eine Rundballenpresse der eingangs genannten Art zu schaffen, die baulich einfach und funktionssicher ist und einen einfachen Antrieb des dritten Wandabschnitts ermöglicht.

Die gestellte Aufgabe wird mit den Merkmalen des Anspruchs 1 gelöst.

Die den dritten Wandabschnitt definierende Leiterbandschlaufe ist kompakt und ermöglicht eine optimale Form der Preßkammer bei Startgröße und bis zum Fertigstellen des Rundballens. Da die Querstäbe der Leiterbandschlaufe über die Breite der Preßkammer zwischen den seitlichen Umlenkbereichen keine Abstützungen benötigen, ergibt sich für den dritten Wandabschnitt eine leichtgewichtige und leicht antreibbare Konstruktion. Die Leiterbandschlaufe kommt mit relativ geringer Antriebsleistung aus, wodurch eine einfache Antriebsverbindung möglich wird, die beim Öffnen der Klappe getrennt wird. Die Querstäbe sind an Gelenkketten oder Riemenschlaufen gehaltert, die über lange Standzeiten hohe Preßkräfte aufnehmen können, relativ umempfindlich gegen Verschmutzung und Emtegut sind, und sich über Kettenräder oder Umlenkrollenpaare verlustarm antreiben lassen. Ein erheblicher Vorteil einer Leiterbandschlaufe mit Querstäben liegt darin, daß über die Preßkammerbreite keine Abstützwalze oder Abstützelemente notwendig sind, so daß der Innenraum der Leiterbandschlaufe frei bleibt. Die Leiterbandschlaufe arbeitet wie ein kleiner, in die Preßkammer integrierter Kettenelevator, der das Erntegut sicher mitnimmt, zur optimalen Form der Preßkammer in der Startgröße beiträgt, und einen wichtigen Beitrag zur Formung des Ballenkerns leistet. Die Antriebsleistung über eine Zahnradverbindung übertragen, die sich durch die Klappenöffnungs- bzw. Schließbewegung trennen bzw. einrücken läßt. Dies ist baulich einfach und funktionssicher.

Eine Kombination eines Walzenganges, einer Preßbahn- oder Preßriemensektion und der endlosen Leiterbandschlaufe in der Klappe führt mit der Antriebsverbindung zu einer Rundballenpresse mit hoher Betriebssicherheit und technisch einfachem und kostengünstigem Aufbau.

Zweckmäßig verlagert sich der der Ballengröße anpassende dritte Wandabschnitt gegen die Spannkraft der Preßbahn- oder Preßriemen. Der dritte Wandabschnitt wird automatisch in Richtung zum ersten Wandabschnitt hin verlagert, sobald ein Rundballen ausgeworfen wurde, und paßt sich beim Wachsen des Rundballens stufenlos und mit zur Verdichtung erforderlichem Gegendruck der Ballengröße an. Es ist möglich, den dritten Wandabschnitt zusätzlich durch federnde Einrichtungen oder Hydraulikzylinder in Schwenkrichtung um die Schwenklagerung in der Klappe zu beaufschlagen.

Zweckmäßig weisen die Umlenkrollen und die Riemenschlaufen ineinandergreifende Eingriffsprofile auf, über die die Antriebsleistung übertragen wird.

Es sollten die ersten und dritten Wandabschnitte in etwa gleiche Höhe aufweisen, so daß sich im Zusammenspiel mit dem zweiten Wandabschnitt eine annähernd runde Form der Preßkammer bei Startgröße ergibt.

Zum Abgreifen der Antriebsbewegung kann zweckmäßig die Drehung eines in der Preßkammer vorgesehen Startelements herangezogen werden, das eine sogenannte Starterwalze oder ein in die Preßkammer greifender Teil der Zuführvorrichtung sein kann.

Werden die beiden Zahnräder direkt miteinander in Eingriff gebracht, so ist dafür Sorge zu tragen, daß das Antriebszahnrad entgegen der Wickelrichtung dreht, damit die Leiterbandschlaufe ordnungsgemäß in Wickelrichtung angetrieben wird. In der Antriebsverbindung nimmt alternativ das Zwischenzahnrad eine Drehrichtungsumkehr vor, so daß beispielsweise die Drehung der Starterwalze direkt abgegriffen werden kann. Das Zwischenzahnrad kann dem Antriebszahnrad oder dem Abtriebszahnrad mit permanentem Eingriff zugeordnet sein.

Vorteilhaft ist das Zwischenzahnrad zusätzlich quer zur Bewegungsrichtung des Abtriebszahnrads beim Schließen der Klappe verstellbar. Damit läßt sich ein sicherer Eingriff zwischen den beim Schließen der Klappe ineinandergreifenden Zahnrädern erzielen bzw. wird die Gefahr von Verzahnungsschäden minimiert, da sich das Antriebszahnrad dreht, während das mit ihm in Eingriff kommende Abtriebszahnrad steht.

Zweckmäßigerweise ist das Zwischenzahnrad gegen Federkraft nachgiebig verstellbar gehaltert, so daß der Eingriff zwischen einem drehenden und einem stehenden Zahnrad für die Verzahnung schonend durchführbar ist.

Alternativ wird sogar ein Hilfsmechanismus verwendet, der unter Nutzen der Relativbewegung der Klappe relativ zum Gehäuse entweder das klappenfeste Abtriebszahnrad mit seiner Verzahnung korrekt auf die Verzahnung des Antriebszahnrades ausrichtet, oder sogar einen Bewegungsimpuls für die Leiterbandschlaufe erzeugt, dank der die beim Eingreifen dann entgegengesetzt rotierenden Zahnräder mit ihren Verzahnungen besonders leicht ineinander greifen.

Anhand der Zeichnung werden Ausführungsformen des Erfindungsgegenstandes erläutert. Es zeigen:
- Fig. 1: eine schematische Seitenansicht einer Rundballenpresse,
- Fig. 2: eine Detail einer Antriebsverbindung in der Rundballenpresse von Fig. 1,
- Fig. 3: eine weitere Ausführungsform einer Antriebsverbindung, und
- Fig. 4: eine weitere Ausführungsform einer Antriebsverbindung, jeweils schematisch.

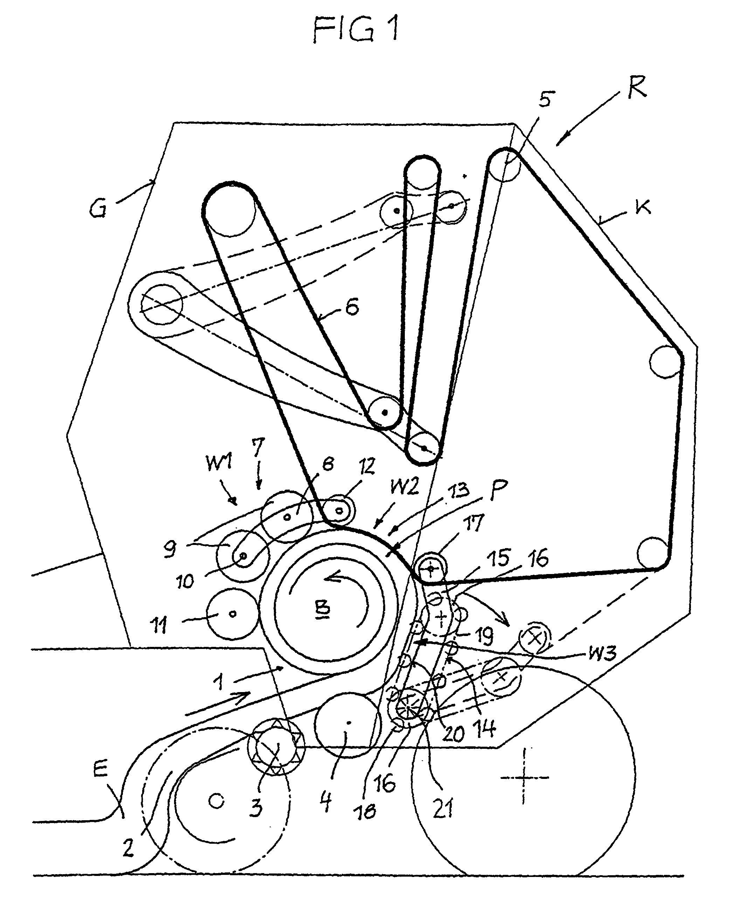

In einer Rundballenpresse R in Fig. 1 ist an einem fahrbaren Gehäuse G hinterseitig eine Klappe K, relativ zum Gehäuse G bewegbar, beispielsweise um eine Achse 5 schwenkbar. Zu einer variablen Preßkammer P führt eine Zuführöffnung 1 im Gehäuse G. Außerhalb der Zuführöffnung 1 sind eine übliche Aufnahmevorrichtung 2 (Pickup), gegebenenfalls ein Schneidwerk 3, und ein Förderkanal vorgesehen, dem entlang aufgenommenes Emtegut E in die Preßkammer P gebracht und dort zu einem Ballen B gewickelt und verdichtet wird. In Fig. 1 ist die Preßkammer P bei Start-Größe gezeigt, die zum anfänglichen Wickeln des Ballens B eingestellt wird. Angrenzend an die Zuführöffnung 1 ist die Preßkammer P durch erste, zweite und dritte Wandabschnitte W1, W2 und W3 begrenzt. Zwischen der Zuführöffnung 1 und dem unteren Ende des dritten Wandabschnittes W3 kann ein in Wickelrichtung (entgegen dem Uhrzeigersinn) angetriebenes Startelement 4 vorgesehen sein, beispielsweise eine sogenannte Starterwalze.

Die ersten und dritten Wandabschnitte W1 und W2 sind in ihrer Höhenerstreckung nicht veränderbar, können sich jedoch um Schwenklagerungen bewegen, und beim Wachsen des Ballens B an dessen Außenkontur anpassen. Im Gehäuse G und der Klappe K verläuft eine Preßbahn oder eine Vielzahl von Preßriemen 6, die mit einer Sektion 13 den zweiten Wandabschnitt W2 definieren.

In Fig. 1 ist der erste Wandabschnitt W1 ein Walzengang 7 mit zwei angetriebenen Walzen 9 in einem Rahmen 8, der beispielsweise um eine Achse 10 schwenkbar ist, oder um die Achse einer zwischen dem Walzengang 7 und der Zuführöffnung 1 stationär angeordneten Walze 11. Am Ende des Rahmens 8 ist eine Spannwalze 12 für die Preßbahn bzw. die Preßriemen 6 angebracht.

Der dritte Wandabschnitt W3 wird gebildet von einer endlosen Leiterbandschlaufe 14, die von Umlenkradpaaren 16 in einer Halterung 15 abgestützt und angetrieben wird. An der Halterung 15 ist eine Spannwalze 17 für die Preßbahn bzw. Preßriemen 6 angebracht. Die Leiterbandschlaufe 14 besteht aus zwei Gelenkketten 19, die Kettenräder 16 umschlingen, und zwischen den Gelenkketten verlaufenden Querstäben 18, die sich mindestens über die Breite der Preßkammer P erstrecken. Gegebenenfalls sind an der Halterung 15 Führungsflächen 20 für die Querstäbe 18 oder für Gleiter oder Laufrollen an den Gelenkketten vorgesehen. Die Halterung 15 ist um die Achse 21 des unteren Kettenrades aus der in Fig. 1 in ausgezogenen Linien gezeigten aufgerichteten Startposition bis in eine in strichlierten Linien angedeutete Endposition in die Klappe K hineinschwenkbar, gegebenenfalls sogar noch weiter als gezeigt.

Anstelle zweiter Gelenkketten mit Querstäben 18 könnten auch zwei endseitige, biegsame Riemen 19 über Umlenkrollen 16 gelegt sein, wobei die Querstäbe 18 an den Riemen 19 befestigt sind. Um die Antriebsleistung übertragen zu können, sollten dann die Umlenkrollen oder -räder 16 wie auch die Unterseiten der Riemen ein Eingriffsprofil besitzen.

Alle drei Wandabschnitte W1, W2, W3 und das Startelement 4 sind in Wickelrichtung angetrieben. Bei vollständig leerer Preßkammer können die ersten und dritten Wandabschnitte W1 und W3 noch weiter zueinander geschwenkt sein als gezeigt, und zwar unter der Zugkraft der Preßbahn oder Preßriemen 6 und/oder unter dem Einfluß eigener Federsysteme oder Schwenkantriebe. Eingeführtes Erntegut E wird von dem Startelement 4 an die Leiterbandschlaufe 14 übergeben und von dieser nach oben gefördert, ehe es von der Sektion 13 mitgenommen und schließlich vom ersten Wandabschnitt W1 wieder nach unten gefördert wird. Dabei wird ein Ballenkern mit annähernd rundem Querschnitt geformt, dem nachkommendes Erntegut E zugeführt wird. Beim Arbeiten der Rundballenpresse R wird der Ballen B immer größer, bis er schließlich die maximal mögliche Größe der Preßkammer P ausfüllt, wobei die ersten und dritten Wandabschnitte W1, W2, W3 dann nach außen geschwenkt sind und die Sektion 13 zwischen den Umlenk- bzw. Spannrollen 12, 17 gegenüber Fig. 1 verlängert ist und den größten Teil des Ballenumfangs umschlingt.

Die Antriebsleitung für die Leiterbandschlaufe 14 kann beispielsweise von dem Antrieb des Startelementes 4 abgegriffen oder mittels eines eigenen Antriebs (nicht gezeigt) auf das untere Kettenrad 16 gebracht werden.

Sobald der Ballen fertig gewickelt ist, wird er in üblicher Weise in Bindematerial eingebunden und ausgeworfen. Zum Auswerfen wird die Klappe K entgegen dem Uhrzeigersinn geöffnet, wobei zumindest die Leiterbandschlaufe 14 mit der Klappe K nach oben geht und eine Auswurföffnung für den Rundballen freimacht. Beim Auswerfen des Rundballens wird die Antriebsverbindung zur Leiterbandschlaufe 14 unterbrochen; die anderen Wandabschnitte W2 und W1 und das Startelement 4 können nach wie vor angetrieben bleiben. Sobald der fertige Rundballen B ausgeworfen wurde, wird die Klappe K geschlossen, wobei die Antriebsverbindung zur Leiterbandschlaufe 14 selbsttätig wieder hergestellt wird.

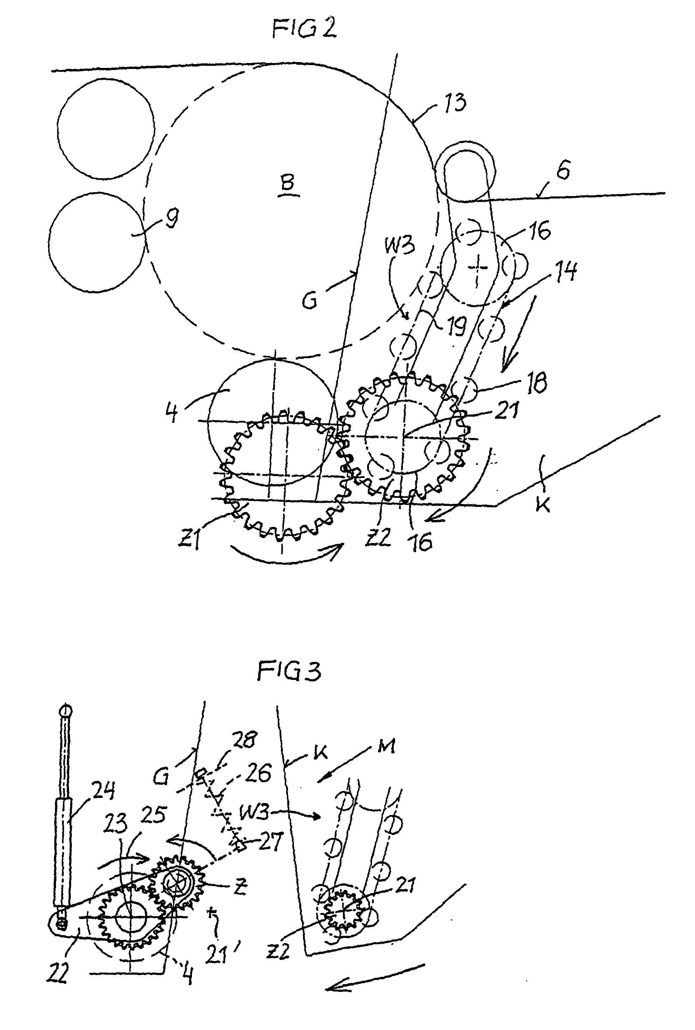

In Fig. 2 ist schematisch ein Grundprinzip des Antriebs der Leiterbandschlaufe 14 gezeigt. Ein Antriebszahnrad Z1, das gehäusefest gelagert ist und sich entgegen dem Uhrzeigersinn dreht, kämmt mit einem Abtriebszahnrad Z2, das beispielsweise mit dem Kettenrad 16 gekuppelt und um die Schwenkachse 21 der Leiterbandschlaufe 14 drehbar ist. In Fig. 2 ist die Klappe K geschlossen, so daß sie dem Gehäuse G unmittelbar gegenübersteht Zweckmäßigerweise könnte eine Verriegelung für die Klappe K vorgesehen sein (nicht gezeigt). Das Antriebszahnrad Z1 kann wirkungsmäßig mit dem Startelement 4, z.B. der Starterwalze, gekoppelt sein. Da die Wickelrichtung des Rundballens jedoch entgegen dem Uhrzeigersinn ist, das Abtriebszahnrad Z2 demzufolge eine Drehung im Uhrzeigersinn benötigt, muß das Antriebszahnrad Z1 entgegen dem Uhrzeigersinn angetrieben werden.

Wie sich aus Fig. 2 entnehmen läßt, wird, da das Abtriebszahnrad Z2 in der Klappe K gelagert ist, die Antriebsverbindung automatisch gelöst, sobald die Klappe K zum Auswerfen eines Rundballens vom Gehäuse G weggeschwenkt wird. Ist der Auswurfvorgang abgeschlossen, dann wird bei der Schließbewegung der Klappe K das Abtriebszahnrad Z2 wieder mit dem Antriebszahnrad Z1 in kämmenden Eingriff gebracht. Da jedoch beim Schließen der Klappe das Antriebszahnrad Z1 nach wie vor angetrieben sein kann, während das Abtriebszahnrad Z2 steht, können unter ungünstigen Umständen Probleme beim Eingreifen der gegenseitigen Verzahnungen auftreten.

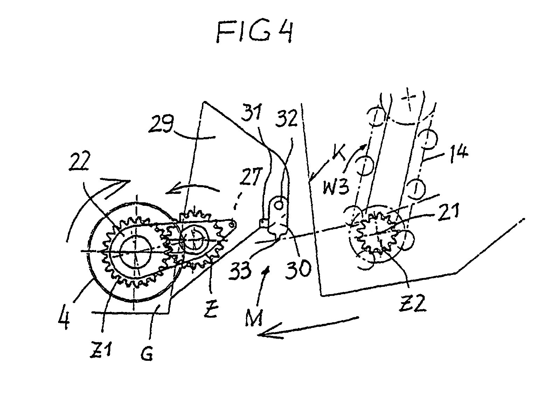

In den Fig. 3 und 4 sind Hilfsmechanismen M angedeutet, die es ermöglichen, die Zahnräder schonend in kämmenden Eingriff zu bringen.

In Fig. 3 wird die Antriebsenergie für den dritten Wandabschnitt W3, z.B., vom Startelement 4 abgegriffen, das in Wickelrichtung, d.h. im Uhrzeigersinn, um die Achse 23 dreht, und mit dem Antriebszahnrad Z1 konzentrisch verbunden ist. Um für das Abtriebszahnrad Z2 die richtige Drehrichtung (ebenfalls im Uhrzeigersinn) einstellen zu können, ist ein Zwischenzahnrad Z vorgesehen, das mit dem Antriebszahnrad Z1 in permanent kämmenden Eingriff steht und sich an einem Träger 22 befindet, der um die Achse 23 schwenkbar ist. Alternativ könnte das Zwischenzahnrad Z auch dem Abtriebszahnrad Z2 mit permanentem kämmenden Eingriff und auf dieselbe Weise schwenkbar zugeordnet sein (nicht gezeigt). An dem Träger 22 greift ein Stellmotor 24, z.B. ein Hydraulikzylinder, an, mit dem der Träger 22 aus der gezeigten Außereingriffsstellung in Richtung eines Pfeiles 25 in eine Eingriffsstellung des Zwischenzahnrades Z verschwenkbar ist.

In Fig. 3 ist die Klappe K noch vom Gehäuse G entfernt, so daß die Antriebsverbindung unterbrochen ist. Das Zwischenzahnrad Z ist mittels des Stellmotors 24 so nach oben verstellt, daß beim Schließen der Klappe K die Achse 21 des Abtriebszahnrades Z2 in die bei 21' angedeutete Position gelangen kann, ohne daß das Zwischenzahnrad Z oder das Antriebszahnrad Z1 in Eingriff mit dem Abtriebszahnrad Z2 kommen. Wenn sich die Achse 21 in der Position 21' befindet, dann wird mittels des Stellmotors 24 das Zwischenzahnrad Z mit einer Bewegungskomponente quer zur Schließrichtung der Klappe K (Pfeil 25) abgesenkt und in Eingriff mit dem Abtriebszahnrad Z2 gebracht.

Alternativ könnte der Träger 22 des Zwischenzahnrades Z über ein Zugglied 27 an einem stationären Widerlager 28 abgestützt sein und durch eine Druckfeder 26 in Richtung auf die Abstützlage vorgespannt werden. Diese Abstützlage entspräche der Eingriffsstellung mit dem Abtriebszahnrad Z2. Wenn beim Schließen der Klappe K, z.B. bei noch drehendem Zwischenzahnrad Z, das stehende Abtriebszahnrad Z2 am Zwischenzahnrad Z zur Anlage kommt und nicht sofort ordnungsgemäß in Eingriff gelangt, kann der Träger 22 um die Achse 23 gegen die Kraft der Feder 26 geringfügig nachgeben, bis die Verzahnungen ordnungsgemäß ineinandergegriffen haben. Unter dem Verzahnungsdruck werden dann die beiden Zahnräder Z2 und Z1 bei Anlage des Zugelementes 27 am Anschlag 28 abgestützt.

Der Hilfsmechanismus M in Fig. 4 dient entweder dazu, das Abtriebszahnrad Z2 beim Schließen der Klappe K in eine bestimmte Drehposition einzustellen, in der der Eingriff mit dem Zwischenzahnrad Z problemlos von statten geht, oder der Leiterbandschlaufe 14 einen Antriebsimpuls in Wickelrichtung zu erteilen, damit sich die Leiterbandschlaufe 14 noch bewegt, wenn die Zahnräder Z, Z2 in ihren Eingriff gelangen.

Das Antriebszahnrad Z1, z.B: des Startelementes 4, treibt das Zwischenzahnrad Z in seinem Träger 22, der um die Achse 21 schwenkbar ist Gegebenenfalls greift bei 27 das Zugelement einer Abfederung oder auch ein Arbeitszylinder an, der die Eingriffsbewegung 25 gemäß Fig. 3 erzeugt.

An einem Bock 29 des Gehäuses G ist eine hängende Klinke 30 um eine Achse 32 verschwenkbar, wobei die Klinke 30 am unteren Ende wenigstens ein zur Verzahnung des Abtriebszahnrades Z2 passendes Eingriffselement 33 trägt. Die Klinke 30 ist bis zur Anlage an einem Anschlag 31 um Uhrzeigersinn verschwenkbar, im Gegenuhrzeigersinn läßt sie sich frei, oder gegebenenfalls gegen eine oder mit einer schwachen Feder, verschwenken. Die Position des Eingriffselementes 33 ist so gewählt, daß sich das Abtriebszahnrad Z2 über einen vorübergehenden Eingriff seiner Verzahnung mit dem Eingriffselement 33 unter der Klinke 30 vorbeibewegen muß, wenn die Klappe K geschlossen wird. Auf diese Weise wird aus der Schließbewegung der Klappe K relativ zum Gehäuse G beim Durchgang des Abtriebszahnrades Z2 an der Klinke 30 dem Abtriebszahnrad Z2 ein Drehimpuls aufgezwungen, mit dem das Abtriebszahnrad Z2 entweder in eine Position gestellt wird, in der nachfolgend der Eingriff mit dem Zwischenzahnrad Z problemlos von statten geht, oder wird die Leiterbandschlaufe 14 in eine Bewegung in Wickelrichtung versetzt, die noch andauert, wenn die Zahnräder Z, Z2 schließlich in Eingriff gelangen. Dies erleichtert den Eingriffsvorgang. Um den Antriebsimpuls noch zu verstärken, könnte das Eingriffselement 33 federbelastet sein (nicht gezeigt). Ferner wäre es alternativ möglich, ein Reibelement, wie einen Gummiblock, am Ort der Klinke 30 festzulegen, dem entlang sich das Abtriebszahnrad Z2 abwälzt, wenn die Klappe K geschlossen wird.

## Patentansprüche

1. Rundballenpresse (R) mit variabler Preßkammer (P), die in einem Gehäuse (G) in Umfangsrichtung angrenzend an eine Zuführöffnung (1) durch erste, zweite und dritte Wandabschnitte (W1, W2, W3) begrenzt wird, von denen jeder wenigstens ein in Wickelrichtung antreibbares Preßelement aufweist, wobei der dritte Wandabschnitt (W3) eine endlose, von den ersten und zweiten Wandabschnitten (W1, W2) getrennte Leiterbandschlaufe (14) ist, die in einer Halterung (15) gelagert und mit der Halterung (15) in einer unten in einer am Gehäuse (G) schwenkbaren Klappe (K) vorgesehenen Schwenklagerung (21) zwischen einer aufgerichteten Startposition und einer niedergedrückten Endposition verschwenkbar ist, ist, **dadurch gekennzeichnet, daß** der dritte Wandabschnitt (W3) zwei außenseitige endlose, in der Halterung (15) gelagerte Kettenrad-Paare (16) umschlingende Gelenkketten mit an den Gelenkketten gehalterten Querstäben (18) oder zwei außenseitig flexible, Umlenkrollenpaare (16) in der Halterung (15) umschlingende Riemenschlaufen (19) und an den Riemenschlaufen gehalterte Querstäbe (18) aufweist, wobei sich die Querstäbe (18) mindestens über die Breite der Preßkammer (P) erstrecken, und daß in einer Antriebsverbindung zur Leiterbandschlaufe (14) ein gehäusefestes Antriebszahnrad (Z1) und ein klappenfestes Abtriebszahnrad (Z2) für die Leiterbandschlaufe (14) vorgesehen sind, die durch die Klappenöffnungs- bzw. Schließbewegung außer bzw. in kämmenden Eingriff bringbar sind.

2. Rundballenpresse nach Anspruch 1, **gekennzeichnet durch** die Kombination eines Walzenganges (7) im ersten Wandabschnitt (W1), einer Preßbahn- oder Preßriemen-Sektion (13) im zweiten Wandabschnitt (W2), und der davon getrennten, endlosen und über die Antriebsverbindung antreibbaren Leiterbandschlaufe (14) im dritten Wandabschnitt (W3).

3. Rundballenpresse nach Anspruch 1, **dadurch gekennzeichnet, daß** die Umlenkrollen (16) und die Riemenschlaufen (19) ineinandergreifende Eingriffsprofile aufweisen.

4. Rundballenpresse nach wenigstens einem der Ansprüche 1 bis 3, **dadurch gekennzeichnet, daß** zwischen der Zuführöffnung (1) und dem unteren Ende des dritten Wandabschnitts (W3) ein in Wickelrichtung rotierendes Startelement (4) vorgesehen ist, vorzugsweise eine Starterwalze oder ein in die Preßkammer (P) greifender Teil einer Zuführvorrichtung, und daß die Antriebsbewegung der Antriebsverbindung von dem Startelement abgreifbar ist.

5. Rundballenpresse nach Anspruch 1, **dadurch gekennzeichnet, daß** die Antriebs- und Abtriebszahnräder (Z1, Z2) direkt miteinander oder über ein mit Antriebszahnrad (Z1) oder dem Abtriebszahnrad (Z2) in permanent kämmendem Eingriff stehendes Zwischenzahnrad in Eingriff bringbar sind.

6. Rundballenpresse nach Anspruch 5, **dadurch gekennzeichnet, daß** das Zwischenzahnrad (Z) quer zur Bewegungsrichtung des Abtriebszahnrades (Z2) beim Schließen der Klappe (K) aus einer Außereingriffsstellung in eine Eingriffsstellung mit dem Abtriebszahnrad (Z2) bzw. dem Antriebszahnrad (Z1) verstellbar ist.

7. Rundballenpresse nach Anspruch 5, **dadurch gekennzeichnet, daß** das Zwischenzahnrad (Z) um die Achse des mit ihm kämmenden Abtriebs- bzw. Antriebszahnrads (Z2, Z1) gegen Federkraft nachgiebig verstellbar ist.

8. Rundballenpresse nach Anspruch 1, **dadurch gekennzeichnet, daß** ein im Gehäuse (G) angeordneter, form- und/oder kraftschlüssiger Hilfsmechanismus (M) zum Ausrichten des klappenfesten Abtriebszahnrades (Z2) in eine vorbestimmte Eingriffsposition relativ zum gehäusefesten Antriebszahnrad (Z1) oder zum Erzeugen eines Drehimpulses der Leiterbandschlaufe (14) in Wickelrichtung unter Nutzen der Relativbewegung zwischen dem Gehäuse (G) und der Klappe (K) beim Schließen der Klappe (K) vorgesehen ist.

## Claims

1. Roll baler (R), having a variable pressing chamber (P), which is defined in a housing (G) by first, second and third wall portions (W1, W2, W3) so as to abut against a feed aperture (1) when viewed with respect to the circumferential direction, each of said wall portions including at least one pressing element which is drivable in the winding direction, the third wall portion (W3) being an endless conductor band loop (14), which is separated from the first and second wall portions (W1, W2), said loop being mounted in a mounting support (15) and being pivotable with the mounting support (15) in a pivotal bearing (21), which is provided at the lower end in a flap (K) which is pivotable on the housing (G), between an aligned starting position and a depressed end position, **characterised in that** the third wall portion (W3) includes two external endless link chains, which loop around pairs of chain wheels (16) mounted in the mounting support (15), said chains having crossbars (18) which are mounted on the link chains, or said third wall portion includes two belt loops (19), which are externally flexible and loop around pairs of guide rollers (16) in the mounting support (15), and crossbars (18) which are mounted on the belt loops, the crossbars (18) extending over at least the width of the pressing chamber (P), and **in that** a driving toothed wheel (Z1), integral with the housing, and a driven toothed wheel (Z2), integral with the flap, are provided for the conductor band loop (14) in a driving connection with the conductor band loop (14), which toothed wheels can be brought out of, or respectively into, meshing engagement by the opening, or respectively closing, movement of the flap.

2. Roll baler according to claim 1, **characterised by** the combination of a roller table (7) in the first wall portion (W1), a pressing path or respectively pressing belt section (13) in the second wall portion (W2), and the endless conductor band loop (14) in the third wall portion (W3), which loop is separated from said second wall portion and is drivable via the driving connection.

3. Roll baler according to claim 1, **characterised in that** the guide rollers (16) and the belt loops (19) include interlocking engagement profiles.

4. Roll baler according to at least one of claims 1 to 3, **characterised in that** a starting element (4), preferably a starter roller or a part of a feed apparatus engaging in the pressing chamber (P), is provided between the feed aperture (1) and the lower end of the third wall portion (W3), said starting element (4) rotating in the winding direction, and **in that** the driving movement of the driving connection is picked-up by the starting element.

5. Roll baler according to claim 1, **characterised in that** the driving and driven toothed wheels (Z1, Z2) can be brought into engagement with each other directly or via an intermediate toothed wheel which is in permanently meshing engagement with the driving toothed wheel (Z1) or the driven toothed wheel (Z2).

6. Roll baler according to claim 5, **characterised in that** the intermediate toothed wheel (Z) is displaceable from a disengaged position into an engaged position with the driven toothed wheel (Z2) or respectively the driving toothed wheel (Z1) transversely relative to the direction of movement of the driven toothed wheel (Z2) during the closure of the flap (K).

7. Roll baler according to claim 5, **characterised in that** the intermediate toothed wheel (Z) is resiliently displaceable about the axis of the driven or respectively driving toothed wheel (Z2, Z1), which meshes with said intermediate toothed wheel, in opposition to spring force.

8. Roll baler according to claim 1, **characterised in that** a form-locking and/or force-locking auxiliary mechanism (M), which is disposed in the housing (G), is provided to align the driven toothed wheel (Z2), which is integral with the flap, into a predetermined engaged position relative to the driving toothed wheel (Z1), which is integral with the housing, or to generate a rotary pulse for the conductor band loop (14) in the winding direction by using the relative movement between the housing (G) and the flap (K) during the closure of the flap (K).

## Revendications

1. Presse à balles rondes (R) avec une enceinte de compression variable (P) qui est délimitée dans un boîtier (G), dans la direction périphérique au voisinage d'une ouverture d'amenée (1), par des premier, deuxième et troisième tronçons de paroi (W1, W2, W3) dont chacun présente au moins un élément de pression apte à être entraîné dans la direction. d'enroulement, où le troisième tronçon de paroi (W3) est une boucle de bande de guidage sans fin (14) séparée des premier et deuxième tronçons de paroi (W1, W2) qui est logée dans un logement (15), et qui peut être amenée à pivoter avec le logement (15) dans un logement pivotant (21) prévu en bas dans un volet (K) apte à pivoter au boîtier (G) entre une position de démarrage érigée et une position finale poussée vers le bas, **caractérisée en ce que** le troisième tronçon de paroi (W3) présente deux chaînes à articulations sans fin au côté extérieur, entourant des paires de roues à chaînes (16) logées dans le logement (15) avec des tiges transversales (18) retenues aux chaînes à articulations ou deux boucles de courroie flexibles (19) au côté extérieur, entourant des paires de rouleaux de renvoi (16) dans le logement (15) et des tiges transversales (18) retenues aux boucles de courroie, où les tiges transversales (18) s'étendent au moins sur la largeur de l'enceinte de compression (P), et **en ce que** sont prévues dans une liaison d'entraînement vers la boucle de bande de guidage (14) une roue dentée menante (Z1) solidaire du boîtier et une roue dentée menée (Z2) solidaire du volet pour la boucle de bande de guidage (14) qui peuvent être amenées en respectivement hors prise d'engrènement par le mouvement d'ouverture et de fermeture du volet.

2. Presse à balles rondes selon la revendication 1, **caractérisée par** la combinaison d'un jeu de cylindres (7) dans le premier tronçon de paroi (W1), une section de bande de pression ou de courroie de pression (13) dans le deuxième tronçon de paroi (W2) et de la boucle de bande de guidage (14) sans fin, séparée de ceux-ci et apte à être entraînée par la liaison d'entraînement dans le troisième tronçon de paroi (W3).

3. Presse à balles rondes selon la revendication 1, **caractérisée en ce que** les rouleaux de renvoi (16) et les boucles de courroie (19) présentent des profilés d'engagement qui viennent en prise.

4. Presse à balles rondes selon au moins l'une des revendications 1 à 3, **caractérisée en ce qu'**il est prévu entre l'ouverture d'amenée (1) et l'extrémité inférieure du troisième tronçon de paroi (W3) un élément de démarrage (4) tournant dans la direction d'enroulement, de préférence un cylindre de démarrage ou une partie d'un dispositif d'amenée s'engageant dans l'enceinte de compression (P), et **en ce que** le mouvement d'entraînement de la liaison d'entraînement peut être prélevé de l'élément de démarrage.

5. Presse à balles rondes selon la revendication 1, **caractérisée en ce que** les roues dentées menante et menée (Z1, Z2) peuvent être amenées en prise directement l'une avec l'autre ou par une roue dentée intermédiaire en prise d'engrènement permanente avec la roue dentée menante (Z1) ou la roue dentée menée (Z2).

6. Presse à balles rondes selon la revendication 5, **caractérisée en ce que** la roue dentée intermédiaire (Z) est ajustable transversalement à la direction de déplacement de la roue dentée menée (Z2) lors de la fermeture du volet (K) d'une position hors prise en une position en prise avec la roue dentée menée (Z2) respectivement la roue dentée menante (Z1).

7. Presse à balles rondes selon la revendication 5, **caractérisée en ce que** la roue dentée intermédiaire (Z) est ajustable autour de l'axe de la roue dentée menée respectivement menante (Z2, Z1) engrenant avec celle-ci d'une manière élastique contre une force de ressort.

8. Presse à balles rondes selon la revendication 1, **caractérisée en ce qu'**il est prévu un mécanisme auxiliaire (M) à concordance des formes et/ou par force, disposé dans le boîtier (G) pour l'orientation de la roue dentée menée (Z2) solidaire du volet en une position d'engagement prédéterminée relativement à la roue dentée menante (Z1) solidaire du boîtier ou pour produire une impulsion de rotation de la boucle de bande de guidage (14) dans la direction d'enroulement en tirant profit du mouvement relatif entre le boîtier (G) et le volet (K) lors de la fermeture du volet (K) .
